# EUROPÄISCHE PATENTSCHRIFT

(11) **EP 1 765 657 B1**
(45) Veröffentlichungstag und Bekanntmachung des Hinweises auf die Patenterteilung: **13.05.2009**
(21) Anmeldenummer: 05766618.2
(22) Anmeldetag: 29.06.2005
(51) Int. Cl.: B62D 25/14

(54) **QUERTRÄGER MIT INTEGRIERTER LUFTFÜHRUNG FÜR EIN KRAFTFAHRZEUG**
CROSS MEMBER WITH AN INTEGRATED AIR CONDUCTION SYSTEM FOR A MOTOR VEHICLE
BARRE TRANSVERSALE COMPRENANT UN SYSTEME DE VENTILATION INTEGRE POUR UN VEHICULE AUTOMOBILE

(30) Priorität: 07.07.2004 DE 102004032949
(43) Veröffentlichungstag der Anmeldung: 28.03.2007
(73) Patentinhaber: Behr GmbH & Co. KG, 70469 Stuttgart (DE)
(72) Erfinder: WOLF, Walter, 71570 Oppenweiler-Zell (DE)
(86) Internationale Anmeldenummer: PCT/EP2005/007014
(87) Internationale Veröffentlichungsnummer: WO 2006/002901

(56) Entgegenhaltungen:
- WO-A-02/49862
- DE-A1- 10 220 025
- DE-A1- 19 807 411
- US-A- 5 707 100
- US-B1- 6 685 259
- US-B2- 6 497 432

## Beschreibung

Die Erfindung betrifft einen Querträger mit integrierter Luftführung für ein Kraftfahrzeug gemäß dem Oberbegriff des Anspruchs 1.

Aus der DE 100 03 575 A1 ist ein Bauteil für ein Kraftfahrzeug, insbesondere ein Querträger für den Cockpitbereich, bekannt, wobei das Bauteil als Leichtbauteil ausgebildet ist mit einem U-förmigen Grundkörper und mit aus angespritztem Kunststoff bestehenden Verstärkungsrippen. Zusammen mit den Verstärkungsrippen wird wenigstens ein Kanal ganz oder teilweise im Innenraum des Grundkörpers eingespritzt.

Die Zwei-Komponenten-Bauweise ist jedoch relativ aufwendig und bereitet beim Recycling Probleme.

Die DE 102 20 025 A1 zeigt einen Querträger für ein Kraftfahrzeug, wobei der Querträger aus einem Grundkörper und einer Verstärkung gebildet ist und der Querträger mindestens eine quer zum Querträger verlaufende Wand aufweist.

Ferner ist aus der US 5,707,100 ein Rahmenelement für den Frontbereich des Innenraums eines Fahrzeugs bekannt, welches als Gussteil ausgebildet ist.

Es ist Aufgabe der Erfindung, einen verbesserten Querträger mit integrierter Luftführung zur Verfügung zu stellen.

Diese Aufgabe wird gelöst durch einen Querträger mit integrierter Luftführung mit den Merkmalen des Anspruchs 1. Vorteilhafte Ausgestaltungen sind Gegenstand der Unteransprüche.

Erfindungsgemäß ist ein Querträger mit integrierter Luftführung vorgesehen, wobei der Querträger versteifende Stege aufweist, und der Querträger einschließlich der Stege durch Leichtmetall-Druckgussteile, insbesondere Magnesium- oder Aluminium-Druckgussteile, gebildet ist. Bevorzugt wird der gesamte Querträger durch ein einziges Druckgussteil, hergestellt in einem "One-Shot-Verfahren", gebildet.

Der Querträger weist zumindest bereichsweise einen im Wesentlichen H-förmigen Querschnitt auf, wobei die Stege jeweils zwischen den oberen oder unteren Enden der Schenkel bis etwa zur Mitte der Schenkel reichen und in den Stegen mindestens eine Aussparung für einen Luftkanal vorgesehen ist. Vorteilhafterweise ist der Querträger über seine gesamte Längserstreckung mit einem im Wesentlichen H-förmigen Querschnitt ausgeführt. Die Länge der Schenkel und der Abstand der Schenkelaußenseiten sind vorzugsweise gleich. Zur Vermeidung von Hinterschneidungen, welche die Verwendung von Kernen oder Schiebern mit sich bringen und daher die Gussform erheblich komplizieren und verteuern, sind die Stege oben und unten versetzt angeordnet, aus Festigkeitsgründen bevorzugt abwechselnd oben und unten. Jedoch können direkt an den Querträger Halter oder weitere Anbauteile angegossen werden.

Vorzugsweise weist der Querträger zumindest bereichsweise einen im Wesentlichen U-förmigen Querschnitt auf, wobei die Stege jeweils im Bereich der Krümmung des im Wesentlichen U-förmigen Querschnitts angeordnet sind, wobei in den Stegen mindestens eine Aussparung für einen Luftkanal vorgesehen ist.

Die Aussparungen bilden vorzugsweise eine in Längsrichtung des Querträgers im Wesentlichen durchgehende Öffnung, welche bevorzugt den Luftkanal aufnimmt. Hierbei ist die Öffnung insbesondere zentral angeordnet. Der Luftkanal ist bevorzugt durch ein Kunststoffrohr gebildet. Dieses kann beispielsweise aus einem PE-Folienmaterial mit Wandstärken von 1 bis 2 mm bestehen, jedoch sind insbesondere geschäumte Kunststoffe geeignet, die neben der Luftführung auch gleichzeitig eine Isolierung ermöglichen. Auf Grund der Stege, welche den Luftkanal an vielen Stellen abstützt, und der relativ geringen Belastungen durch die durchgeleitete Luft kann ein relativ weiches Material verwendet werden. Anstelle eines Luftkanals oder zusätzlich zu demselben können natürlich auch andere ein Medium durchleitende Kanäle und/oder Kabel durch die Öffnung durchgeführt werden.

Der Querträger bildet im Falle einer zwei- oder mehrteiligen Ausgestaltung vorzugsweise zumindest über Teilbereiche direkt einen Teil des Luftkanals von der Klimaanlage zu den Ausströmstellen in den Fahrzeuginnenraum, so dass kein zusätzlicher Luftkanal im Querträger vorgesehen ist und die Zahl der Teile minimiert und der Aufbau vereinfacht werden kann. Dabei ist der Querträger insbesondere derart ausgebildet, dass die zwei oder mehr Teile gleich ausgebildet sind, so dass nur eine Gussform erforderlich ist. Die Teile können auf jede bekannte Weise verbunden werden, insbesondere mittels Schrauben, Nieten, Schweißen, Kleben, Clinchen. Bildet der Querträger direkt den Luftkanal, so kann zur Wärmeisolation zusätzlich eine Isolationsschicht an den Innenmantelflächen des Luftkanals vorgesehen sein.

Die Stege des Querträgers sind vorzugsweise voneinander einen halben bis einen Aussparungsdurchmesser beabstandet angeordnet. Dies ermöglicht eine ausreichende Steifigkeit bei geringem Materialverbrauch.

Es kann mindestens ein Luftleitelement, vorzugsweise aus Kunststoff, vorgesehen sein, welches die von der Klimaanlage kommende Luft in den Querträger einleitet oder aus ihm ausleitet. Dieses kann durch die Öffnungen zum Ein- oder Ausleiten der Luft in den Luftkanal eingeführt sein, so dass eine gute Umlenkung der Luftströmung gewährleistet ist und der Strömungswiderstand möglichst gering ist.

Im Folgenden wird die Erfindung anhand mehrerer Ausführungsbeispiele, teilweise unter Bezugnahme auf die Zeichnung im Einzelnen erläutert. In der Zeichnung zeigen:
- Fig. 1: eine perspektivische Ansicht eines Querträgers gemäß dem ersten Ausführungsbeispiel,
- Fig. 2: einen Schnitt in Höhe eines Stegs quer durch eine Abwandlung des Querträgers von Fig. 1 in der Ebene II-II von Fig. 1,
- Fig. 3: eine perspektivische Ansicht einer zweiten Abwandlung des Querträgers von Fig. 1,
- Fig. 4: einen Schnitt quer durch einen Querträger gemäß dem zweiten Ausführungsbeispiel,
- Fig. 5: einen Schnitt quer durch den Querträger von Fig. 4 an einer anderen Stelle mit in Kreuzschraffur dargestelltem Strömungsquerschnitt des Luftkanals,

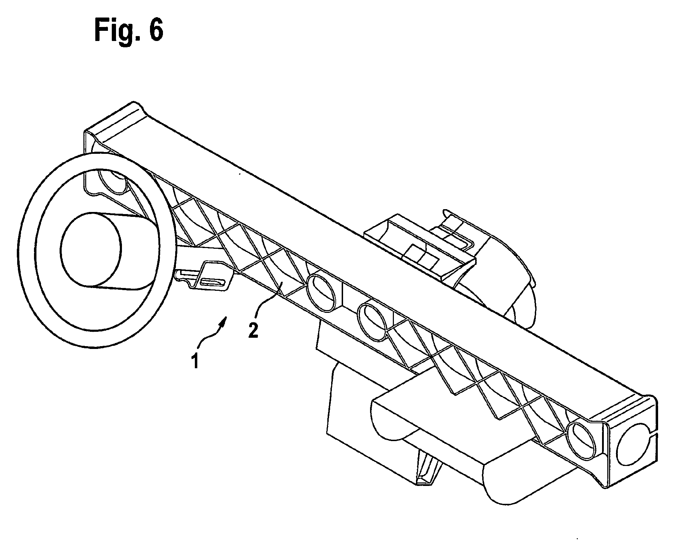

- Fig. 6: eine perspektivische Ansicht eines zweiteiligen Querträgers gemäß dem vierten Ausführungsbeispiel, teilweise mit hieran befestigten Elementen,

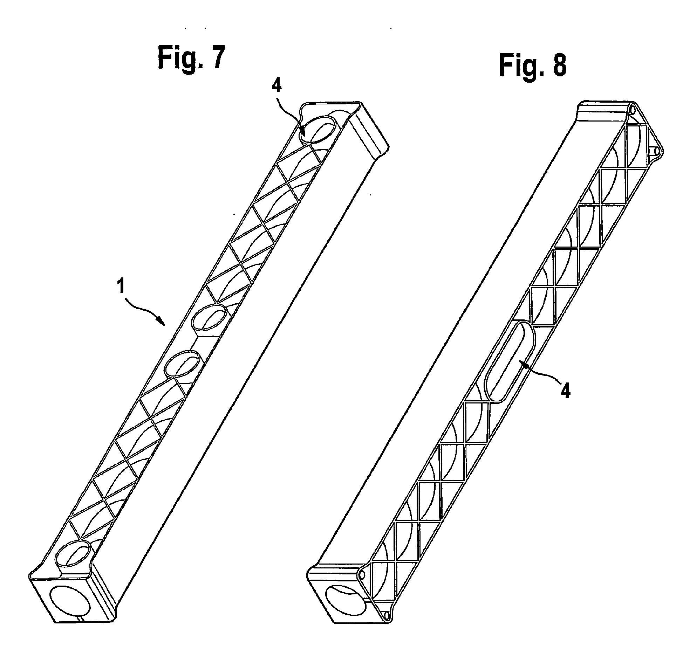

- Fig. 7: eine weitere perspektivische Ansicht des Querträgers von Fig. 6 ohne hieran befestigte Elemente,
- Fig. 8: eine andere perspektivische Ansicht des Querträgers von Fig. 6 ohne hieran befestigte Elemente,
- Fig. 9: einen Schnitt quer durch den Querträger von Fig. 6,
- Fig. 10: einen Schnitt quer durch eine Variante eines zweiteiligen Querträgers,
- Fig. 11: eine perspektivische Ansicht eines mittleren Bereichs eines Querträgers gemäß dem fünften Ausführungsbeispiel,
- Fig. 12: eine andere perspektivische Ansicht des mittleren Bereichs des Querträgers von Fig. 11, und
- Fig. 13a, 13b: Schnittdarstellungen des Querträgers von Fig. 11, und
- Fig. 14a, 14b, 14c: Schnittdarstellungen eines Querträgers gemäß einem sechsten Ausführungsbeispiel, und
- Fig. 15a, 15b, 15c: Schnittdarstellungen eines Querträgers gemäß einem siebten Ausführungsbeispiel.

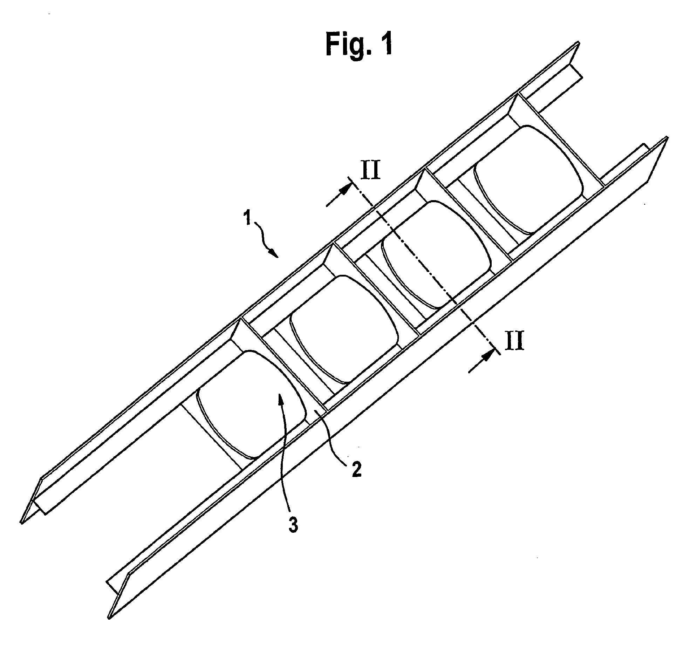

Fig. 1 zeigt einen Querträger 1 eines Kraftfahrzeugs, wie er im Cockpitbereich verwendet wird. Dabei hat der Querträger 1 insbesondere eine tragende und stützende Funktion, wofür an ihm Halter (nicht dargestellt) zur Anbringung von Elementen, wie insbesondere der Lenksäule, einstückig vorgesehen sind. Der Querträger 1 ist einstückig mittels Magnesium-Druckguss hergestellt.

Der Querträger 1 weist eine etwa H-förmige Gestalt auf, wobei zwischen den oberen und unteren Hälften der Schenkel verlaufende Stege 2 abwechselnd angeordnet sind, die, wenn in Längsrichtung des Querträgers 1 gesehen, im zentralen Bereich des "H" eine kreisförmige Öffnung 3 freilassen. Der Abstand der Stege 2 beträgt gemäß dem ersten Ausführungsbeispiel einen halben Öffnungsdurchmesser. Um diese Struktur auszubilden sind die Rippenstrukturen, d.h. die Stege 2, versetzt in jeder Werkzeughälfte ausgebildet, so dass auf Grund seiner hinterschneidungsfreien Ausgestaltung keine Kerne oder Schieber erforderlich sind.

Gemäß einer nicht in der Zeichnung dargestellten Abwandlung mit etwas kleinerer Öffnung und geringerer Belastung beträgt der Abstand einen Öffnungsdurchmesser.

Die kreisförmige Öffnung 3 dient der Aufnahme eines Luftkanals (nicht dargestellt), welcher in Längsrichtung des Querträgers 1 von einer Seite her eingeschoben wird. Dabei kann auf Grund der Abstützungen durch die Stege 2 ein kostengünstiges PE-Folienmaterial mit einer Wandstärke von 1 bis 2 mm verwendet werden.

Gemäß einer Variante wird ein geschäumtes Kunststoffmaterial als Luftkanal verwendet. Dieses hat den Vorteil, dass es zum Einführen leicht zusammengedrückt werden kann und sich nach Erreichen der Endposition wieder von selbst in seine Ausgangsform zurückverformt. Ferner bewirkt die Verwendung eines geschäumten Kunststoffmaterials eine Isolation, so dass ein geringerer Wärmeverlust oder eine geringere Erwärmung im Luftkanal erfolgt. Eine zusätzliche Isolation ist nicht erforderlich.

Gemäß einer zweiten Variante wird ein schlauchförmiges PE-Folienmaterial mit einer Wandstärke von 0,1 bis 1mm als Luftkanal verwendet. Dieses Folienmaterial lässt sich leicht zusammenfalten und daher sehr einfach in diesem kompakten Zustand in den freien Bereich einbringen. Unter Betriebsbedingungen entfaltet sich das Folienmaterial in Folge des erhöhten Luftdrucks und liegt an den begrenzenden Flächen an.

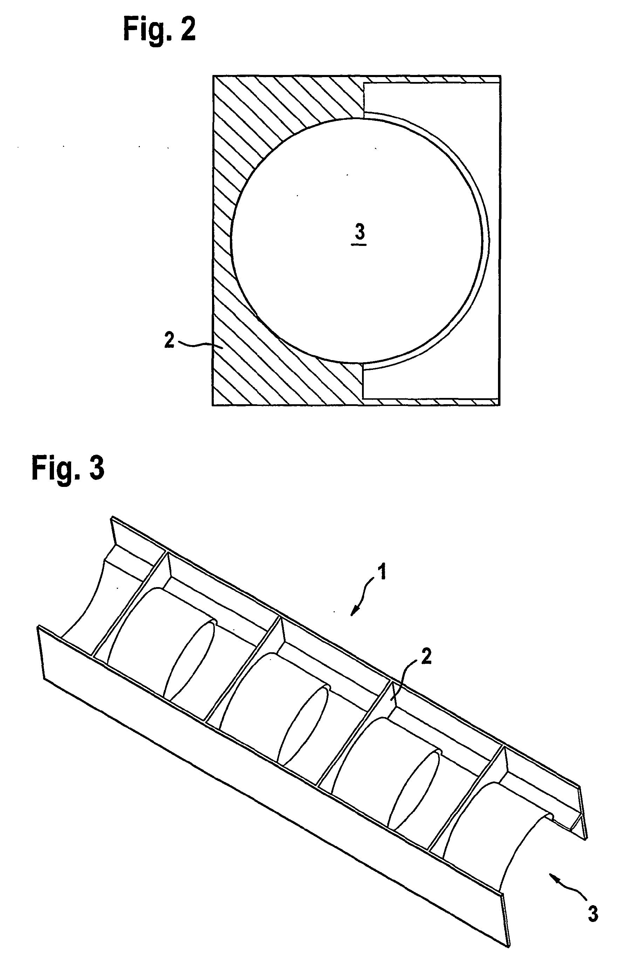

Gemäß einer Abwandlung, deren Schnittdarstellung in Fig. 2 dargestellt ist, weisen die Stege 2 sich in Längsrichtung des Querträgers 1 erstreckende halbzylindrische Verlängerungen auf, welche sich beiderseits von je einem Steg 2 aus erstrecken. Im Übergangsbereich von einem Halbzylinder zum benachbarten Halbzylinder ist hierbei kein Steg vorgesehen. In einer nicht dargestellten erfindungsgemäßen Abwandlung des Querträgers 1, kann auch im Übergangsbereich von einem Halbzylinder zum benachbarten Halbzylinder ein Steg vorgesehen sein.

Eine zweite Abwandlung, deren perspektivische Ansicht in Fig. 3 dargestellt ist, weist ebenfalls halbzylindrische Bereiche auf, diese erstrecken sich jedoch jeweils nur auf einer Seite eines Stegs 2 und in jedem Übergangsbereich ist jeweils ein Steg vorgesehen.

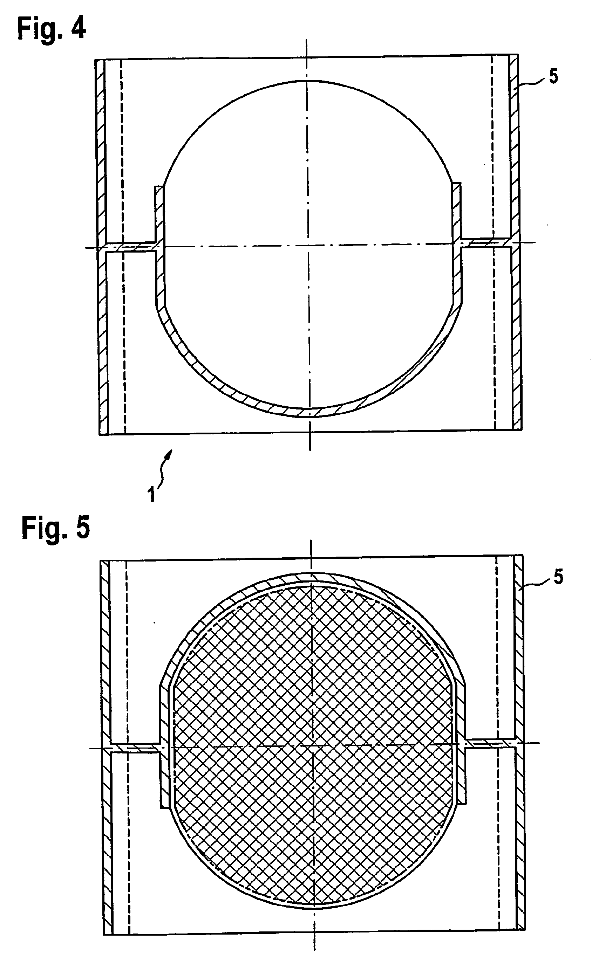

Die Figuren 4 und 5 zeigen einen Querträger 1 gemäß dem zweiten Ausführungsbeispiel. Hierbei ist zur Unterstützung der Steifigkeit desselben ein in Längsrichtung des Querträgers 1 durchgehender, parallel zu den Schenkeln 5 verlaufender, aber deutlich kürzer als die Schenkel 5 ausgebildeter Teil der Luftkanalwand beidseitig gerade ausgebildet. Zwischen den oberen beziehungsweise unteren Enden ist in einem Radius verlaufend eine Stützwand für den Luftkanal abwechselnd ausgebildet. Der Luftkanal kann entsprechend dem des ersten Ausführungsbeispiels ausgebildet sein, wobei sein Querschnitt auf den durchgehenden freien Querschnitt im Querträger 1 abgestimmt ist. Der Querträger 1 besteht aus einer Aluminium-Legierung.

Gemäß einem dritten, nicht in der Zeichnung dargestellten Ausführungsbeispiel verlaufen die Stege schräg zueinander, wobei sie sich kreuzen. Hierbei treten wiederum keine Hinterschneidungen auf, so dass ein einfaches "Auf-Zu-Werkzeug" verwendet werden kann, ohne dass Schieber oder Kerne erforderlich sind.

Gemäß dem vierten Ausführungsbeispiel ist der Querträger 1 in Längsrichtung geteilt ausgebildet, wobei die Teilung in der Mitte der Schenkel 5 des H-förmigen Querträgers 1 verläuft. Bei den beiden Querträgerhälften handelt es sich jeweils um ein Magnesium-Druckgussteil, das in einer Form ohne Schieber und ohne den Einsatz von Kernen gegossen wurde. Die beiden Hälften sind mittels Schrauben fest verbunden.

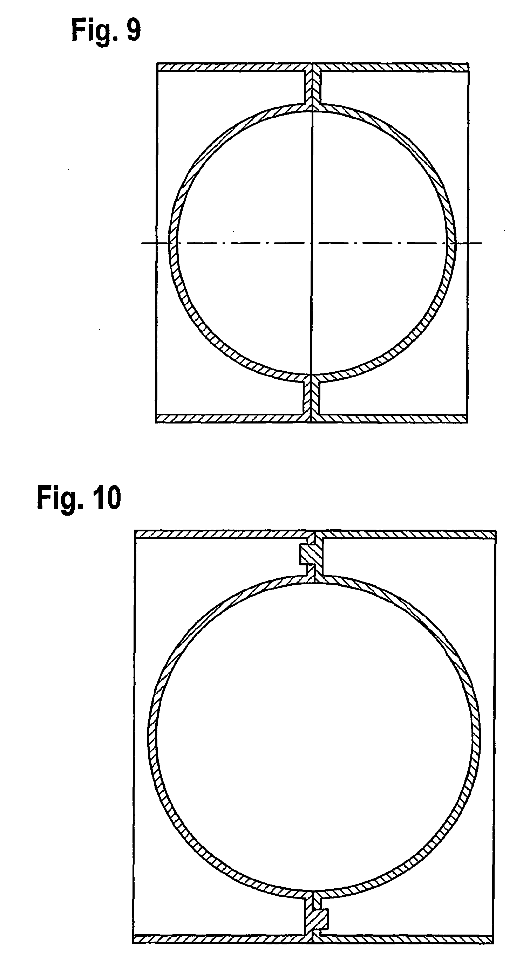

Fig. 10 zeigt eine Variante gemäß der die beiden Hälften gleich ausgebildet sind und auf einer Seite mit einer Öffnung und auf der anderen Seite mit einem Vorsprung versehen sind, die der Positionierung und gegebenenfalls auch der Fixierung dienen, insbesondere wenn der Vorsprung als gegossener Niet dient.

Der zweiteilige Aufbau ermöglicht in diesem Fall dennoch eine vollständige Ausbildung des Luftkanals im Querträger 1 einschließlich der Ausgestaltung der Lufteinleit- und Ausleitbereiche. Gemäß einer gusstechnisch einfacheren Variante werden die Ein- und Ausleitungen durch eingesetzte Kunststoff-Luftleitelemente gebildet, die die Luftströmung umlenken. Ferner können die Stege zum Versteifen des Querträgers bei beiden Hälften nahezu beliebig angeordnet sein, sofern hierbei keine Hinterschneidungen vorgesehen sind. Gemäß dem vorliegenden Ausführungsbeispiel verlaufen die Stege 2 in einem Winkel von 45° zur Längsrichtung des Querträgers, wobei sie sich im Schenkelbereich treffen. Andere, beispielsweise wabenartige Strukturen sind ebenfalls möglich. Ferner sind Öffnungen 4 für die Luftein- und -ausleitung in den Luftkanal vorgesehen.

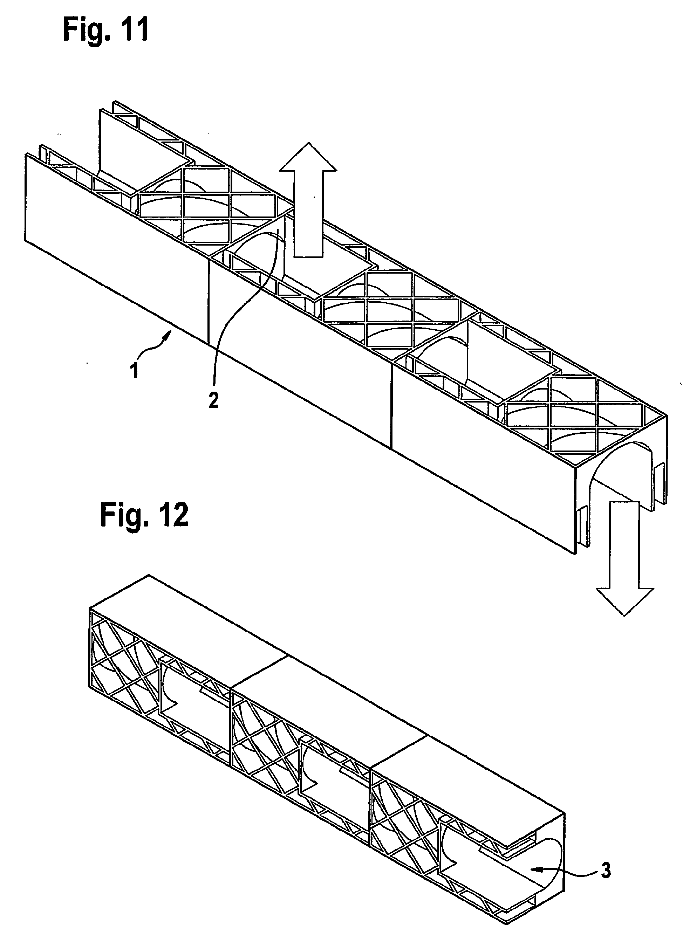

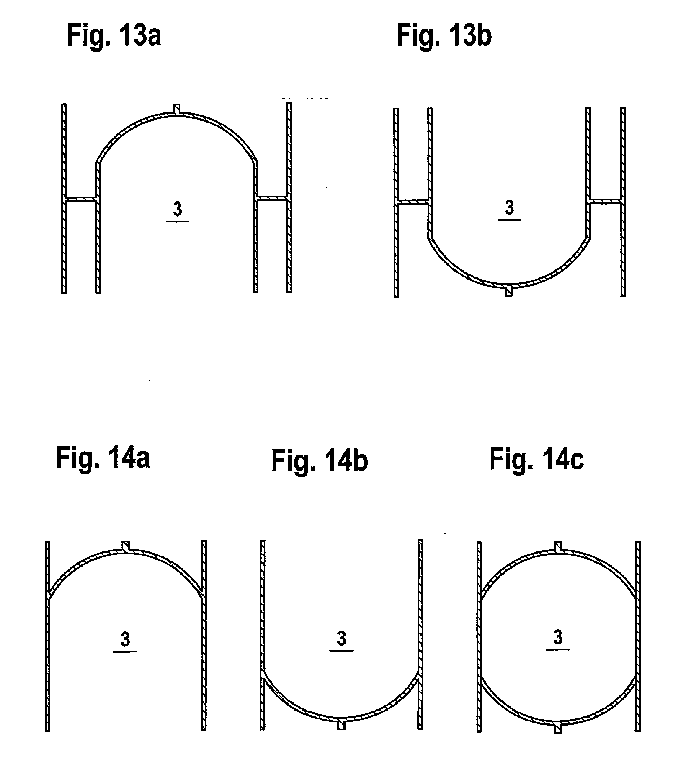

Gemäß dem fünften Ausführungsbeispiel ist ein als Aluminium-Druckgussteil ausgebildeter Querträger 1 derart ausgebildet, dass, wie aus Fig. 13a und 13b ersichtlich, die für den Luftkanal zur Verfügung stehende Öffnung 3 U-förmig ausgebildet ist. Dabei weist der Querträger 1 einstückig miteinander ausgebildete Abschnitte auf, die in den Figuren 11 und 12 zur Verdeutlichung durch Linien an den Seitenflächen getrennt dargestellt sind. Jeder Abschnitt weist zwei Bereiche auf, wobei die U-förmige Öffnung 3 in einem Bereich um 180° bezüglich der U-förmigen Öffnung 3 im benachbarten Bereich gedreht ist, so dass keine Hinterschneidungen vorgesehen sind und die Herstellung wiederum ein einem einfachen Werkzeug ohne Kerne und Schieber erfolgen kann.

Im Bereich zwischen den seitlichen Wandflächen und den äußeren Seiten der U-förmigen Bereiche sind Verstärkungsrippen angeordnet.

Gemäß einem sechsten Ausführungsbeispiel ist ein als Aluminium-Druckgussteil, mit einem im Wesentlichen U-förmigen Querschnitt ausgeführter, Querträger 1 derart ausgebildet, dass, wie in den Fig. 14a, 14b und 14c dargestellt, die für den Luftkanal zur Verfügung stehende Öffnung 3 U-förmig ausgebildet ist, wobei die Längsseiten des U-förmigen Luftkanals geradlinig im gekrümmten Bereich der U-Form verlängert sind. Weitere zusätzliche äußere Schenkel 5 sind nicht vorgesehen. Die Stege zu Versteifung sind zwischen diesen Verlängerungen und dem gekrümmten Bereich angeordnet. Die gezeigte Ausführungsform findet insbesondere Einsatz für geringer beanspruchte Querträger und/oder um Bauraum einzusparen.

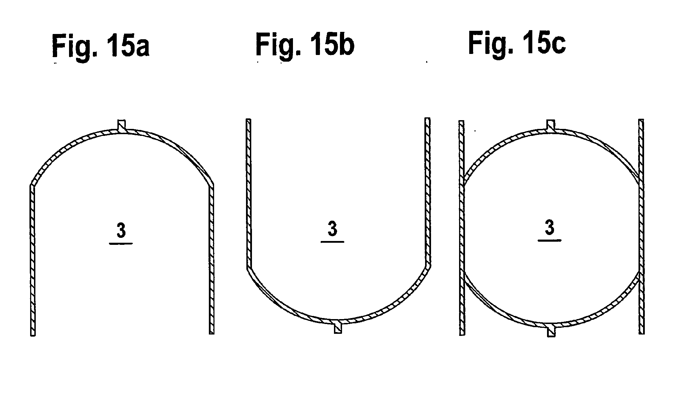

Sind die Ansprüche hinsichtlich der Steifigkeit und Belastbarkeit noch geringer, so kann wie im siebten Ausführungsbeispiel in den Figuren 15a, 15b und 15c dargestellt auch die Verlängerung der Längsseiten des U-förmigen Luftkanals entfallen.

Die Ausgestaltung des Querträgers 1, wie in den Figuren 14a bis 14c und 15a bis 15c dargestellt, erfolgt, um eine genügend hohe Steifigkeit des Querträgers zu erhalten, vorzugsweise nur bereichsweise.

## Patentansprüche

1. Querträger mit integrierter Luftführung, insbesondere für ein Kraftfahrzeug, wobei der Querträger versteifende Stege aufweist, wobei der Querträger (1) einschließlich der Stege durch Leichtmetall-Druckgussteile, insbesondere Magnesium- oder Aluminium-Druckgussteile, gebildet ist, **dadurch gekennzeichnet, dass** der Querträger (1) zumindest bereichsweise einen im Wesentlichen H-förmigen Querschnitt aufweist, wobei die Stege jeweils zwischen den oberen oder unteren Enden der Schenkel bis zur Mitte der Schenkel (5) reichen, wobei in den Stegen mindestens eine Aussparung für einen Luftkanal vorgesehen ist.

2. Querträger nach Anspruch 1, **dadurch gekennzeichnet, dass** der Querträger (1) aus genau einem Leichtmetall-Druckgussteil gebildet ist.

3. Querträger nach Anspruch 1 oder 2, **dadurch gekennzeichnet, dass** der Querträger (1) zumindest bereichsweise einen im Wesentlichen U-förmigen Querschnitt aufweist, wobei die Stege jeweils im Bereich der Krümmung des im Wesentlichen U-förmigen Querschnitts angeordnet sind, wobei in den Stegen mindestens eine Aussparung für einen Luftkanal vorgesehen ist.

4. Querträger nach einem der vorhergehenden Ansprüche, **dadurch gekennzeichnet, dass** die Aussparungen eine in Längsrichtung des Querträgers im Wesentlichen durchgehende Öffnung bilden.

5. Querträger nach Anspruch 4, **dadurch gekennzeichnet, dass** in die Öffnung ein Luftkanal eingeführt ist.

6. Querträger nach Anspruch 5, **dadurch gekennzeichnet, dass** der Luftkanal durch ein Kunststoffrohr oder eine Folie gebildet ist.

7. Querträger nach Anspruch 6, **dadurch gekennzeichnet, dass** das Kunststoffrohr aus einem geschäumten Kunststoff gebildet ist.

8. Querträger nach Anspruch 6, **dadurch gekennzeichnet, dass** die Folie eine Kunststofffolie, insbesondere eine PE-Folie ist, welche eine Dicke von 0,1 bis 2 mm aufweist.

9. Querträger nach Anspruch 8, **dadurch gekennzeichnet, dass** die Folie schlauchartig ausgebildet ist und Dicke von 0,1 bis 2 mm aufweist.

10. Querträger nach einem der vorhergehenden Ansprüche, **dadurch gekennzeichnet, dass** der Querträger (1) in Längsrichtung geteilt ausgebildet ist.

11. Querträger nach Anspruch 10, **dadurch gekennzeichnet, dass** der Querträger (1) einen in Längsrichtung verlaufenden Luftkanal aufweist, welcher im Wesentlichen direkt durch den Querträger (1) gebildet ist.

12. Querträger nach Anspruch 11, **dadurch gekennzeichnet, dass** der Luftkanal an seinen Innenmantelflächen eine Isolation aufweist.

13. Querträger nach einem der vorhergehenden Ansprüche, **dadurch gekennzeichnet, dass** die Stege des Querträgers (1) voneinander einen halben bis einen Aussparungsdurchmesser beabstandet angeordnet sind.

14. Querträger nach einem der vorhergehenden Ansprüche, **dadurch gekennzeichnet, dass** mindestens ein Luftleitelement vorgesehen ist, welches die von der Klimaanlage kommende Luft in den Querträger (1) einleitet oder aus ihm ausleitet.

## Claims

1. Cross-member with an integrated air conduit, in particular for a motor vehicle, the cross-member having stiffening webs and the cross-member (1), including its webs, being formed of light metal pressure diecast components, in particular magnesium or aluminium pressure diecastings, **characterised in that** at least in some areas the cross-member (1) has an essentially H-shaped cross-section and the webs all extend between the upper or lower ends of the arms as far as the middle of the arms (5), at least one aperture being provided in the webs for an air duct.

2. Cross-member according to Claim 1, **characterised in that** the cross-member consists of just one light metal pressure diecasting.

3. Cross-member according to Claims I or 2, **characterised in that** at least in some areas the cross-member (1) has an essentially U-shaped cross-section, the webs all being arranged in the area of the curvature of the said essentially U-shaped cross-section, and at least one aperture is provided in the webs for an air duct.

4. Cross-member according to any of the preceding claims, **characterised in that** the apertures form an essentially through-going passage in the longitudinal direction of the cross-member.

5. Cross-member according to Claim 4, **characterised in that** an air duct is inserted through the said passage.

6. Cross-member according to Claim 5, **characterised in that** the air duct consists of a plastic tube or a foil.

7. Cross-member according to Claim 6, **characterised in that** the plastic tube is formed from a foamed plastic.

8. Cross-member according to Claim 6, **characterised in that** the foil is a plastic foil of thickness 0.1 to 2 mm.

9. Cross-member according to Claim 8, **characterised in that** the foil is formed into a flexible tube and its thickness is 0.1 to 2 mm.

10. Cross-member according to any of the preceding claims, **characterised in that** the cross-member (1) is divided in its longitudinal direction.

11. Cross-member according to any of the preceding claims, **characterised in that** the cross-member (1) has an air duct extending in its longitudinal direction, which essentially is formed directly through the cross-member (1).

12. Cross-member according to Claim 11, **characterised in that** the air duct has insulation on its inside surfaces.

13. Cross-member according to any of the preceding claims, **characterised in that** the webs of the cross-member (1) are arranged a distance away from one another equal to half to one diameter of an aperture.

14. Cross-member according to any of the preceding claims, **characterised in that** at least one air conduit element is provided, which passes air coming from an air-conditioning system into the cross-member (1) or away from it.

## Revendications

1. Traverse à guidage d'air intégré, en particulier pour un véhicule automobile, où la traverse présente des nervures de renfort, où la traverse (1), y compris les nervures, est formée par des pièces moulées sous pression, en métal léger, en particulier par des pièces moulées sous pression, en magnésium ou en aluminium,
**caractérisée en ce que** la traverse (1) présente, au moins par zones, une section pratiquement en forme de H, où les nervures s'étendent à chaque fois entre les extrémités supérieures ou inférieures des branches, jusqu'au milieu des branches (5), où il est prévu, dans les nervures, au moins un évidement pour un conduit d'air.

2. Traverse selon la revendication 1, **caractérisée en ce que** la traverse (1) est formée précisément dans une pièce moulée sous pression, en métal léger.

3. Traverse selon la revendication 1 ou 2, **caractérisée en ce que** la traverse (1) présente, au moins par zones, une section pratiquement en forme de U, où les nervures sont disposées à chaque fois dans la zone de la courbure de la section sensiblement en forme de U, où il est prévu, dans les nervures, au moins un évidement pour un conduit d'air.

4. Traverse selon l'une quelconque des revendications précédentes, **caractérisée en ce que** les évidements forment une ouverture pratiquement continue, dans le sens de la longueur de la traverse.

5. Traverse selon la revendication 4, **caractérisée en ce qu'**un conduit d'air est introduit dans l'ouverture.

6. Traverse selon la revendication 5, **caractérisée en ce que** le conduit d'air est formé par un tube en matière plastique ou par une feuille.

7. Traverse selon la revendication 6, **caractérisée en ce que** le tube en matière plastique est réalisé dans une matière plastique expansée.

8. Traverse selon la revendication 6, **caractérisée en ce que** la feuille est une feuille de matière plastique, en particulier une feuille de polyéthylène (PE) qui présente une épaisseur comprise entre 0,1 mm et 2 mm.

9. Traverse selon la revendication 8, **caractérisée en ce que** la feuille est configurée en forme de flexible et présente une épaisseur comprise entre 0,1 mm et 2 mm.

10. Traverse selon l'une quelconque des revendications précédentes, **caractérisée en ce que** la traverse (1) est configurée en étant divisée dans le sens de la longueur.

11. Traverse selon la revendication 10, **caractérisée en ce que** la traverse (1) présente un conduit d'air s'étendant dans le sens de la longueur, lequel conduit d'air est pratiquement formé directement par la traverse (1).

12. Traverse selon la revendication 11, **caractérisée en ce que** le conduit d'air présente une isolation au niveau de ses surfaces latérales intérieures.

13. Traverse selon l'une quelconque des revendications précédentes, **caractérisée en ce que** les nervures de la traverse (1) sont disposées en étant espacées les unes des autres suivant un intervalle compris entre un demi-diamètre et un diamètre entier d'évidement.

14. Traverse selon l'une quelconque des revendications précédentes, **caractérisée en ce qu'**il est prévu au moins un élément déflecteur d'air qui fait entrer dans la traverse (1) l'air provenant du système de climatisation, ou bien le fait sortir de ladite traverse.
